# EUROPÄISCHE PATENTSCHRIFT

(11) **EP 1 875 180 B1**
(45) Veröffentlichungstag und Bekanntmachung des Hinweises auf die Patenterteilung: **02.09.2009**
(21) Anmeldenummer: 06705925.3
(22) Anmeldetag: 07.02.2006
(51) Int. Cl.: G01K 1/16

(54) **SENSORANORDNUNG ZUR TEMPERATURMESSUNG**
SENSOR ARRANGEMENT FOR MEASURING TEMPERATURE
DISPOSITIF DE DETECTION POUR MESURER DES TEMPERATURES

(30) Priorität: 12.04.2005 DE 102005016896
(43) Veröffentlichungstag der Anmeldung: 09.01.2008
(73) Patentinhaber: Sitronic Ges. für elektrotechnische Ausrüstung mbH & Co. KG, 71116 Gärtringen (DE)
(72) Erfinder: MAU, Gert, 71134 Aildingen (DE); RAAB, Christoph, 70199 Stuttgart (DE)
(74) Vertreter: Kohler Schmid Möbus
(86) Internationale Anmeldenummer: PCT/DE2006/000197
(87) Internationale Veröffentlichungsnummer: WO 2006/108367

(56) Entgegenhaltungen:
- DE-A1- 10 214 368
- DE-A1- 10 227 454
- DE-A1- 19 728 804
- DE-T2- 69 907 493
- US-A1- 2005 178 200

## Beschreibung

Die Erfindung betrifft eine Sensoranordnung zur Messung der Temperatur einer Oberfläche.

Derartige Sensoranordnungen, vorzugsweise zur Temperaturmessung von näherungsweise planen Oberflächen, sind verschiedentlich bekannt.

Aus der DE 699 07 493 T2 ist ein Oberflächentemperaturfühler bekannt, bei dem ein Wärme leitendes Oberflächenkontaktteil mit Hilfe einer Feder gegen die zu messende Oberfläche gedrückt wird. Das Oberflächenkontaktteil enthält einen elektrisch isoliert angebrachten Temperatursensor.

Aus der DE 102 27 454 A1 ist ein Anlegetemperaturfühler bekannt, bei dem ein Anlegeteil mit Hilfe einer Wärmeleitfolie und Wärmeleitpaste thermisch leitend an die zu messende Oberfläche angebunden ist. An das Anlegteil ist mit Hilfe einer weiteren Wärmeleitfolie ein Temperatursensor angekoppelt.

Die JP 09-210802 A beschreibt ein Terminal zur Hitze-Kopplung, welches aus einem T-förmigen Teil, das groß genug ist, um einen Temperatursensor aufzunehmen, sowie einem Detektions-Terminal aus einem leitfähigen Material besteht, wobei eine Elektrode des Temperatursensors mit dem Detektions-Terminal über eine Drahtverbindung elektrisch verbunden ist.

Die EP 1 026 489 A1 offenbart ein Kontakt-Temperaturmessgerät mit einem Probenkopf, der einen Temperatursensor enthält, wobei der Probenkopf flexible Zuführungsdrähte aufweist, die den Kopf verlassen und durch eine Abschirmung hindurch verlaufen, welche thermisch vom Probenkopf isoliert ist. Der Probenkopf ist verkippbar und wird beim Verkippen nur durch die Zuführungsdrähte geführt.

Der Erfindung liegt die Aufgabe zugrunde, eine kostengünstige Sensoranordnung zu schaffen, mit der die Temperatur einer näherungsweise ebenen Oberfläche, insbesondere einer Scheibe erfasst werden kann.

Diese Aufgabe wird erfindungsgemäß durch die Sensoranordnung des Anspruchs 1 gelöst. Die abhängigen Ansprüche stellen bevorzugte Ausführungsformen der Erfindung dar.

Die erfindungsgemäße Sensoranordnung zur Temperaturmessung einer Oberfläche weist einen auf einem Schaltungsträger angebrachten Temperatursensor auf, der an einer Stirnseite eines zungenförmigen Vorsprungs des Schaltungsträgers angebracht und in unmittelbarer Nähe zu der vom Schaltungsträger beabstandeten Oberfläche positionierbar ist, wobei an dem Schaltungsträger ein den zungenförmigen Vorsprung im Bereich des Temperatursensors umgebendes, flexibles Wärmeleitelement mit einer wärmeleitenden Kappe oder wärmeleitenden Folie zur Kontaktierung der Oberfläche angebracht ist.

Die Anbringung des Temperatursensors unmittelbar auf dem Schaltungsträger reduziert die Kosten der Sensoranordnung, da keine zusätzlichen Verbindungselemente benötigt werden. Durch die gut wärmeleitenden Leiterbahnen des Schaltungsträgers kann die Wärme von der Oberfläche über den Schaltungsträger auf den Temperatursensor übertragen werden. Hierzu steht der Schaltungsträger durch ein Wärmeleitelement mit der Oberfläche in Verbindung, wobei die Stirnseite des Schaltungsträgers bevorzugt näherungsweise parallel zur Oberfläche ausgerichtet ist. Das Wärmeleitelement ist flexibel ausgelegt, sodass es mechanische Beanspruchungen aufnehmen kann, wodurch eine Beschädigung des Schaltungsträgers oder des Temperatursensors beim Ein- oder Ausbau oder dem Betrieb vermieden werden kann.

In einer besonders bevorzugten Ausführungsform ist in die Kappe ein wärmeleitender Einsatz eingebracht. Die Kappe ermöglicht es, dass die Sensoranordnung entlang der Oberfläche gleitend verschoben bzw. gedreht werden kann, was insbesondere beim Ein- oder Ausbau der Sensoranordnung von Vorteil ist, z.B. wenn der Schaltungsträger mittels eines Bajonettverschlusses befestigt wird. Der Einsatz besteht aus einem flexiblen Material.

In einer bevorzugten Weiterbildung besteht die Kappe aus einem gut Wärme leitenden Metall, insbesondere Kupfer oder Aluminium. Die Kappe kann in diesem Fall die Wärme besonders gut auf den wärmeleitenden Einsatz übertragen. Außerdem sind Kappen aus diesen Materialien besonders kostengünstig herzustellen.

In einer weiteren bevorzugten Weiterbildung besteht der Einsatz aus Wärme leitendem Silikon, das in die Kappe eingesteckt oder eingespritzt ist, wodurch ein guter Wärmekontakt mit der Kappe hergestellt werden kann.

In einer besonders bevorzugten Weiterbildung befindet sich in dem Einsatz eine Aussparung, in welche der Schaltungsträger mit dem Temperatursensor eingebracht werden kann. Hierdurch wird ein besonders inniger Wärmekontakt des Temperatursensors mit dem Einsatz ermöglicht.

In einer weiteren vorteilhaften Weiterbildung ist der Einsatz an der dem Temperatursensor gegenüberliegenden Seite des Schaltungsträgers angeordnet. In diesem Fall kann eine flächige und somit besonders stark wärmeleitende Verbindung des Schaltungsträgers mit dem Einsatz hergestellt werden.

In einer bevorzugten Weiterbildung ist zwischen der Kappe und einem Gehäuse des Schaltungsträgers eine flexible Dichtung angebracht. Die flexible bzw. federnde Dichtung, beispielsweise ein Silikonring, drückt die Kappe gegen die Oberfläche, wobei durch die Federung mechanische Toleranzen ausgeglichen werden können und mechanische Beschädigungen der Anordnung beim Andrücken vermieden werden können.

In einer alternativen Ausführungsform ist das Wärmeleitelement eine Wärme leitende Folie, insbesondere eine Silikonfolie. Eine solche Folie stellt eine kostengünstige Realisierung für das Wärmeleitelement dar. Die Folie kann entlang der Oberfläche verschoben werden, ohne dass dies zu Beschädigungen der Anordnung führt. Dies ist insbesondere beim Ein- und Ausbauen mit einem Bajonettverschluss von Vorteil.

In einer bevorzugten Weiterbildung ist die Wärme leitende Folie mit einem Gehäuse, welches den Schaltungsträger umgibt, insbesondere durch Kleben, Schweißen, Festklemmen, Schrauben oder Einspritzen, verbunden. Hierdurch wird eine feste Verbindung der Folie mit dem Gehäuse ermöglicht.

In einer bevorzugten Weiterbildung ist die Wärme leitende Folie wenigstens in einem Teilbereich zweilagig aufgebaut. Die zur Oberfläche weisende Schicht besteht vorzugsweise aus einem dünnen, gut gleitfähigen Material, insbesondere einer Metallfolie. Die zum Schaltungsträger weisende Seite besteht hierbei aus einem weichen, flexiblen Material, insbesondere einem wärmeleitendem Silikon. Dabei kann die Oberfläche der Metallfolie deutlich größer als die Oberfläche der Silikonschicht sein. Insbesondere kann die Silikonschicht nur in einem Teilbereich der Metallfolie vorgesehen sein, welcher an die Stirnseite des Schaltungsträgers angrenzt.

In einer besonders bevorzugten Ausführungsform ist der Schaltungsträger an der Stirnseite, an der dem Temperatursensor gegenüberliegenden Seite und/oder an den Seitenflächen metallisiert. Durch die Metallisierung wird eine gute Wärmeleitfähigkeit sichergestellt. Die Metallisierung kann hierbei gleichzeitig der elektrischen Kontaktierung des Temperatursensors dienen. Insbesondere kann hierzu die Metallisierung der Stirnseite mit einem Anschluss des Temperatursensors verbunden sein.

In einer Weiterbildung sind in dem Schaltungsträger in der Nähe des Temperatursensors Durchkontaktierungen angebracht. Diese sind für gewöhnlich als metallisierte Bohrungen durch den Schaltungsträger ausgeführt und dienen der elektrischen sowie thermischen Verbindung des Temperatursensors mit der Unterseite des Schaltungsträgers, an der in diesem Fall eine bevorzugt flächige Metallisierung angebracht ist.

In einer bevorzugten Ausführungsform ist auf dem Schaltungsträger zusätzlich eine Auswerteeinheit angebracht, sodass eine gemeinsame Baugruppe sowohl zur Messung als auch zur Auswertung eingesetzt werden kann.

In einer weiteren bevorzugten Ausführungsform sind auf dem Schaltungsträger weitere Sensoren, insbesondere Temperatursensoren, Feuchtesensoren oder Lichtsensoren, angebracht. Der Schaltungsträger ist in diesem Fall bevorzugt im Innenraum eines Kraftfahrzeugs angebracht und dient zur Messung der Temperatur der Frontscheibe. Hierzu kann sie bevorzugt in einen Rückspiegelfuß als Gehäuse integriert werden. Durch eine gleichzeitige Messung der Temperatur der Scheibenoberfläche, des Innenraumes sowie der Luftfeuchte mit den entsprechenden Sensoren kann die Sensoranordnung beispielsweise zur Messung des Scheibenbeschlags eingesetzt werden.

Weitere Vorteile ergeben sich aus der Beschreibung und den Zeichnungen. Die vorstehend genannten und die noch weiter aufgeführten Merkmale können jeweils einzeln oder in Kombination verwendet werden. Die erwähnten Ausführungsformen sind nicht als abschließende Aufzählung zu verstehen, sondern haben vielmehr beispielhaften Charakter.

Die Erfindung wird nachfolgend anhand von Ausführungsbeispielen unter Bezugnahme auf die Zeichnungen näher erläutert. Die Figuren der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann. Es zeigt:
- **Fig. 1a-c**: eine Aufsicht, eine Seitenansicht und einen Schnitt durch eine erste Ausführungsform der erfindungsgemäßen Sensoranordnung mit einer Kappe und einem flexiblen wärmeleitenden Einsatz als Wärmeleitelement; und
- **Fig. 2a, b**: eine Aufsicht bzw. Seitenansicht einer zweiten Ausführungsform der erfindungsgemäßen Sensoranordnung mit einer Wärme leidenden Folie als flexiblem Wärmeleitelement.

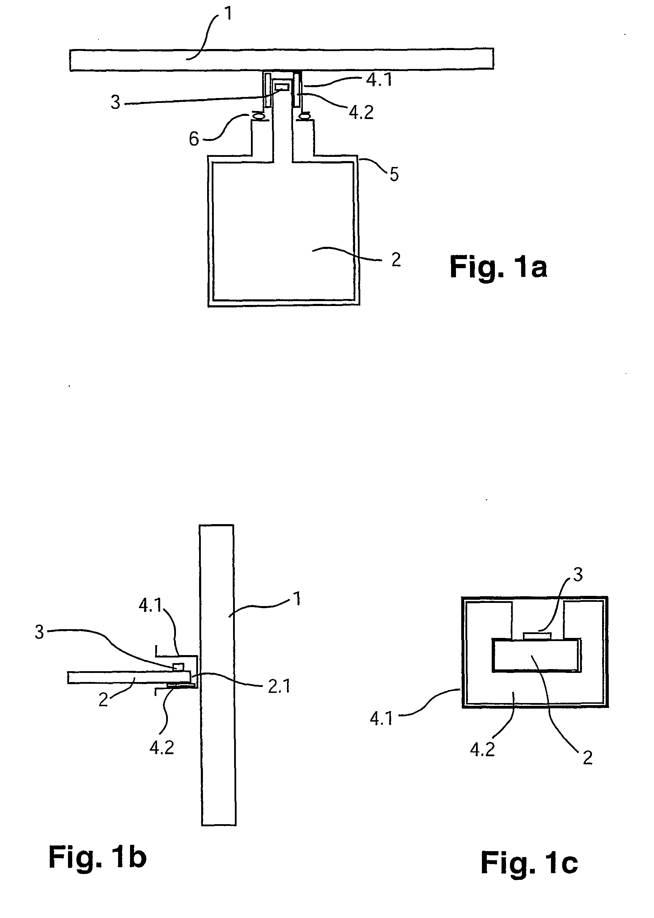

In **Fig. 1** ist eine Sensoranordnung zur Temperaturmessung an einer nahezu planen, durch die Frontscheibe eines Kraftfahrzeugs gebildeten Oberfläche **1** gezeigt. Die Sensoranordnung weist einen Temperatursensor **3** auf, der auf einem Schaltungsträger **2** in unmittelbarer Nähe zu einer Stirnseite **2.1** des Schaltungsträgers 2 angeordnet ist. Die Stirnseite 2.1 verläuft parallel zur Oberfläche 1 entlang eines zungenförmigen Vorsprungs des Schaltungsträgers 2 und ist in unmittelbarer Nähe der Oberfläche 1 positioniert. Der Schaltungsträger 2 ist von einem Gehäuse **5** umschlossen, welches an einem Rückspiegelfuß eines Rückspiegels des Kraftfahrzeugs befestigt wird, welcher im Bereich der Zunge eine Öffnung aufweist.

Zwischen dem Schaltungsträger 3 und der Oberfläche 1 ist ein flexibles, Wärme leitendes Element angebracht, welches aus einer Kappe **4.1** und einem in diese eingebrachten, wärmeleitenden Einsatz **4.2** besteht. Die Kappe 4.1 ist mit dem Gehäuse 5 an dessen Öffnung über eine federnde Dichtung **6** aus schwach wärmeleitendem Silikon verbunden, wodurch eine gute thermische Isolierung gegen die Umgebung gewährleistet ist. Die federnde Dichtung 6 ermöglicht außerdem ein beschädigungsfreies Anpressen der Sensoranordnung an die Oberfläche 1 in einer senkrecht zur Oberfläche 1 verlaufenden Richtung, sodass der Temperatursensor 3 in einem definierten Abstand zur Oberfläche 1 angeordnet werden kann. Solange die Sensoranordnung nicht an der Scheibe montiert ist, ist die federnde Dichtung 6 nahezu entspannt. In diesem Fall wird die Kappe 4.1 durch eine nicht bildlich dargestellte Schnappvorrichtung fixiert. Bei der Montage an der Scheibe wird die Kappe 4.1 geringfügig in die federnde Dichtung 6 gedrückt. Dabei gleitet der Schaltungsträger 2 im wärmeleitenden Einsatz 4.2 und/oder der wärmeleitende Einsatz in der Kappe 4.1.

Die Kappe 4.1 ist so ausgeformt, dass ihre Kontaktfläche zwischen mit der Oberfläche 1 maximal bzw. der Luftspalt zwischen der Kappe 4.1 und der Oberfläche 1 minimal ist. Dadurch ist eine gute thermische Kopplung zwischen Oberfläche 1 und Kappe 4.1 gegeben, die sicherstellt, dass die Kappe 4.1 nahezu die gleiche Temperatur wie die Oberfläche 1 aufweist.

Alternativ kann die Kappe 4.1 so ausgeformt sein, dass nahezu punktförmig an einem oder mehreren Punkten auf der Oberfläche aufliegt. Dadurch wird die thermische Kopplung zur Oberfläche geringfügig vermindert, aber fertigungsbedingte, d.h. von Scheibe zu Scheibe variierende Unebenheiten der Oberfläche führen nicht zu einer variierenden thermischen Kopplung.

Die Kappe 4.1 ist aus Metall, bevorzugt aus Kupfer oder Aluminium hergestellt, der wärmeleitende Einsatz 4.2 besteht aus einem wärmeleitenden Silikon, weiches in die Kappe 4.1 eingespritzt ist. Wie in Fig. 1c genauer zu erkennen, umschließt der Einsatz 4.2 den Schaltungsträger 2 bis auf einen Bereich an der Oberseite des Schaltungsträgers, auf dem der Temperatursensor 3 angeordnet ist.

Der flexible, Wärme leitende Einsatz 4.2 ist so konstruiert, dass er von dem Schaltungsträger 2 gegen die Kappe 4.1 gedrückt wird, d.h. es besteht ein enger Kontakt zwischen der Kappe 4.1 und dem flexiblen, Wärme leitenden Einsatz 4.2 auf der einen Seite und dem flexiblen, Wärme leitenden Einsatz 4.2 und dem Schaltungsträger 2 auf der anderen Seite. Durch diesen innigen Kontakt und die gute Wärmeleitung des Einsatzes 4.2 wird gewährleistet, dass der Schaltungsträger 2 in der unmittelbaren Nähe der Stirnfläche 2.1, die näherungsweise die Temperatur der Kappe 4.1 und damit der Oberfläche 1 hat.

Der Schaltungsträger 2 ist im Bereich der Stirnfläche 2.1, an der Unterseite sowie den Seitenflächen metallisiert. Hierdurch wird eine besonders gute Wärmeleitung zwischen Schaltungsträger 2 und Einsatz 4.2 sichergestellt. Einer der elektrischen Kontakte des Temperatursensors 3 ist mit der Stirnfläche des Schaltungsträgers 2 elektrisch leitend verbunden. Alternativ kann der elektrische Kontakt auch über Durchkontaktierungen mit der Unterseite des Schaltungsträgers 2 verbunden sein. Hierdurch kann die Temperatur des Temperatursensors 3 besonders gut an die Temperatur des Einsatzes 4.2 angeglichen werden.

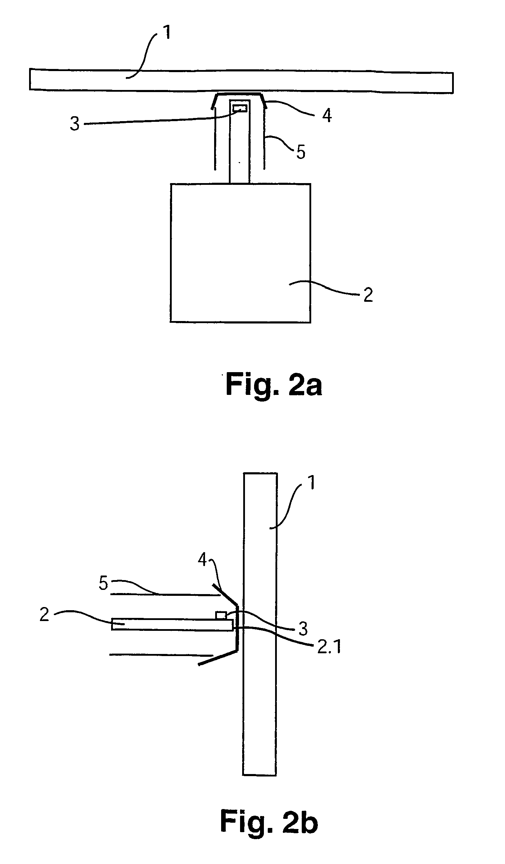

**Fig. 2** zeigt eine Sensoranordnung, bei der das flexible, wärmeleitende Element im Gegensatz zur in Fig. 1 gezeigten Anordnung von einer wärmeleitenden Folie **4** gebildet wird. Über die wärmeleitende Folie 4 kann ebenfalls ein guter thermischer Kontakt mit der Oberfläche 1 sichergestellt werden. Die Folie 4 ist unmittelbar mit dem Gehäuse 5 des Schaltungsträgers 2 verbunden.

Um den Temperatursensor 3 in einem definierten Abstand zur Oberfläche 1 zu positionieren, wird der Schaltungsträger 2 mit der Folie 4 an die Oberfläche 1 angepresst, indem am der Stirnseite 2.1 gegenüberliegenden Ende des Schaltungsträgers 2 eine federndes Element (nicht dargestellt) angebracht wird. Das federnde Element bewirkt entsprechend der federnden Dichtung von Fig. 1 ein Anpressen mit Toleranzausgleich senkrecht zur Oberfläche 1.

Sowohl die in Fig. 1 als auch die in Fig. 2 gezeigte Sensoranordnung ermöglichen eine Befestigung mittels eines Bajonettverschlusses, da die robuste Metall-Kappe 4.1 bzw. die Folie 4 sicherstellen, dass eine Verschiebung oder Drehung der Sensoranordnung entlang der Oberfläche 1 im Regelfall nicht zu einer Beschädigung derselben führt. Eine solche Beschädigung könnte beispielsweise dann auftreten, wenn der Einsatz 4.2 aus Silikon unmittelbar mit der Oberfläche 1 in Berührung stehen würde.

Auf dem Schaltungsträger 2 sind in Fig. 1 und 2 nicht bildlich dargestellte, weitere Sensoren sowie eine Auswerteeinheit angebracht. Die weiteren Sensoren umfassen einen Temperatursensor zur Messung der Temperatur des Innenraums sowie einen Luftfeuchtesensor. Die zwei weiteren Sensoren können zusammen mit dem Temperatursensor zur Messung der Oberflächentemperatur für die Bestimmung der Beschlagsneigung der Frontscheibe eingesetzt werden.

### BEZUGSZEICHENLISTE

- 1: Oberfläche
- 2: Schaltungsträger
- 2.1: Stirnseite des Schaltungsträgers
- 3: Temperatursensor
- 4: wärmeleitende Folie
- 4.1: Kappe
- 4.2: Einsatz
- 5: Gehäuse
- 6: Dichtung

## Patentansprüche

1. Sensoranordnung zur Temperaturmessung einer Oberfläche (1) mit einem auf einem Schaltungsträger (2) vorgesehenen Temperatursensor (3), der an einer Stirnseite (2.1) eines zungenförmigen Vorsprungs des Schaltungsträgers (2) angebracht und in unmittelbarer Nähe zu der vom Schaltungsträger (2) beabstandeten Oberfläche (1) positionierbar ist, wobei an dem Schaltungsträger (2) ein den zungenförmigen Vorsprung im Bereich des Temperatursensors (3) umgebendes, flexibles Wärmeleitelement (4; 4.1, 4.2) mit einer wärmeleitenden Kappe (4.1) oder wärmeleitenden Folie (4) zur Kontaktierung der Oberfläche (1) angebracht ist.

2. Sensoranordnung nach Anspruch 1, bei der in die Kappe (4.1) ein wärmeleitender Einsatz (4.2) eingebracht ist.

3. Sensoranordnung nach Anspruch 1 oder 2, bei der die Kappe (4.1) aus einem gut Wärme leitenden Metall, insbesondere Kupfer oder Aluminium, besteht.

4. Sensoranordnung nach Anspruch 2 oder 3, bei welcher der Einsatz (4.2) aus Wärme leitendem Silikon besteht, das in die Kappe (4.1) eingesteckt oder eingespritzt ist.

5. Sensoranordnung nach einem der Ansprüche 2 bis 4, bei der sich in dem Einsatz (4.2) eine Aussparung befindet, in welche der Schaltungsträger (2) mit dem Temperatursensor (1) eingebracht werden kann.

6. Sensoranordnung nach Anspruch 5, bei welcher der Einsatz (4.2) an der dem Temperatursensor (3) gegenüberliegenden Seite des Schaltungsträgers (2) angeordnet ist.

7. Sensoranordnung nach einem der Ansprüche 1 bis 6, bei der zwischen der Kappe (4.2) und einem Gehäuse (5) des Schaltungsträgers (2) eine flexible Dichtung (6) angebracht ist.

8. Sensoranordnung nach Anspruch 1, bei der das Wärmeleitelement aus einer Wärme leitenden Folie (4), insbesondere einer Silikonfolie, besteht.

9. Sensoranordnung nach Anspruch 8, bei der die Wärme leitende Folie (4) mit einem Gehäuse (5), welches den Schaltungsträger (2) umgibt, insbesondere durch Kleben, Schweißen, Festklemmen, Schrauben oder Einspritzen, verbunden ist.

10. Sensoranordnung nach Anspruch 8 oder 9, bei der die Wärme leitende Folie (4) wenigstens in einem Teilbereich zweilagig aufgebaut ist.

11. Sensoranordnung nach einem der vorhergehenden Ansprüche, bei der der Schaltungsträger (2) an der Stirnseite (2.1), an der dem Temperatursensor (3) gegenüberliegenden Seite und/oder an den Seitenflächen metallisiert ist.

12. Sensoranordnung nach Anspruch 11, bei der in dem Schaltungsträger (2) in der Nähe des Temperatursensors (3) Durchkontaktierungen angebracht sind.

13. Sensoranordnung nach einem der vorhergehenden Ansprüche, bei der auf dem Schaltungsträger (2) zusätzlich eine Auswerteeinheit angebracht ist.

14. Sensoranordnung nach einem der vorhergehenden Ansprüche, bei der auf dem Schaltungsträger (2) weitere Sensoren, insbesondere Temperatursensoren, Feuchtesensoren oder Lichtsensoren, angebracht sind.

## Claims

1. A sensor arrangement for measuring the temperature of a surface (1), comprising a temperature sensor (3) which is provided on a circuit board (2), said temperature sensor (3) being mounted on the front face (2.1) of a tongue-shaped projection of said circuit board (2), and which can be positioned in direct proximity of the surface (1) which is spaced apart from said circuit board (2), wherein a resilient heat-conducting element (4; 4.1, 4.2), comprised of a heat-conducting cap (4.1) or a heat-conducting film (4) for contacting the surface (1) and surrounding the tongue-shaped projection in the region of the temperature sensor (3) is mounted on the circuit board (2).

2. The sensor arrangement according to claim 1, wherein a heat-conducting insert (4.2) is inserted in the cap (4.1).

3. The sensor arrangement according to claim 1 or 2, wherein the cap (4.1) is comprised of a metal having good heat-conduction, in particular copper or aluminum.

4. The sensor arrangement according to claim 2 or 3, wherein the insert (4.2) is comprised of heat-conducting silicone which is inserted or injected into the cap (4.1).

5. The sensor arrangement according to any one of the claims 2 to 4, wherein a recess is located in the insert (4.2) into which the circuit board (2) with the temperature sensor (3) may be inserted.

6. The sensor arrangement according to claim 5, wherein the insert (4.2) is arranged on the side of the circuit board (2) opposite of the temperature sensor (3).

7. The sensor arrangement according to any one of the claims 1 to 6, in which a resilient sealing (6) is mounted between the cap (4.2) and a housing (5) of the circuit board (2).

8. The sensor arrangement according to claim 1, wherein the heat-conducting element is comprised of a heat-conducting film (4), in particular a silicone film.

9. The sensor arrangement according to claim 8, wherein the heat-conducting film (4) is connected to a housing (5) surrounding the circuit board (2), in particular by gluing, welding, clamping, screwing or injecting.

10. The sensor arrangement according to claim 8 or 9, wherein the heat-conducting film (4) at least in one section is structured in two layers.

11. The sensor arrangement according to any one of the preceding claims, wherein the circuit board (2) is metallized on the front face (2.1), on the side opposite of the temperature sensor (3) and/or on the side surfaces.

12. The sensor arrangement according to claim 11, wherein plated through-holes are arranged in the circuit board (2) in proximity of the temperature sensor (3).

13. The sensor arrangement according to any one of the preceding claims, wherein on the circuit board (2) an additional evaluation unit (2) is mounted.

14. The sensor arrangement according to any one of the preceding claims, wherein further sensors, in particular, temperature sensors, humidity sensors or light sensors, are mounted on the circuit board (2).

## Revendications

1. Dispositif à capteur pour la mesure de température d'une surface (1) avec un capteur de température (3) prévu sur un support de circuit (2), lequel est appliqué sur un côté frontal (2.1) d'une saillie en forme de languette du support de circuit (2) et est positionnable à proximité directe de la surface (1) à intervalle du support de circuit (2), un élément thermique (4 ; 4.1, 4.2) flexible, entourant la saillie en forme de languette au niveau du capteur de température (3) avec un capuchon (4.1) conducteur thermique ou une feuille (4) conductrice thermique étant appliqué sur le support de circuit (2) pour contacter la surface (1).

2. Dispositif à capteur selon la revendication 1, où un insert (4.2) conducteur thermique est mis en place dans le capuchon (4.1).

3. Dispositif à capteur selon la revendication 1 ou la revendication 2, où le capuchon (4.1) est composé d'un matériau bon conducteur thermique, en particulier du cuivre ou de l'aluminium.

4. Dispositif à capteur selon la revendication 2 ou la revendication 3, où l'insert (4.2) est composé de silicone conductrice thermique fichée ou injectée dans le capuchon (4.1).

5. Dispositif à capteur selon l'une des revendications 2 à 4, où un évidement est ménagé dans l'insert (4.2), dans lequel le support de circuit (2) peut être mis en place avec le capteur de température (1).

6. Dispositif à capteur selon la revendication 5, où l'insert (4.2) est disposé sur le côté du support de circuit (2) opposé au capteur de température (3).

7. Dispositif à capteur selon l'une des revendications 1 à 6, où un joint flexible (6) est appliqué entre le capuchon (4.2) et un boîtier (5) du support de circuit (2).

8. Dispositif à capteur selon la revendication 1, où l'élément thermique est composé d'une feuille conductrice thermique (4), en particulier d'une feuille de silicone.

9. Dispositif à capteur selon la revendication 8, où la feuille conductrice thermique (4) est raccordée à un boîtier (5) qui entoure le support de circuit (2), en particulier par collage, soudage, fixation, vissage ou par injection.

10. Dispositif à capteur selon la revendication 8 ou la revendication 9, où la feuille conductrice thermique (4) présente une structure à deux couches au moins dans une zone partielle.

11. Dispositif à capteur selon l'une des revendications précédentes, où le support de circuit (2) est métallisé sur le côté frontal (2.1), sur le côté opposé au capteur de température (3) et/ou sur les surfaces latérales.

12. Dispositif à capteur selon la revendication 11, où des connexions transversales sont ménagées dans le support de circuit (2) à proximité du capteur de température (3).

13. Dispositif à capteur selon l'une des revendications précédentes, où une unité d'analyse est en outre appliquée sur le support de circuit (2).

14. Dispositif à capteur selon l'une des revendications précédentes, où d'autres capteurs, en particulier des capteurs de température, des capteurs d'humidité ou des capteurs de lumière, sont appliqués sur le support de circuit (2).
